**Europäisches Patentamt**

**European Patent Office**

**Office européen des brevets**

(19)

(11) Veröffentlichungsnummer : **0 319 763 B1**

(12) **EUROPÄISCHE PATENTSCHRIFT**

(45) Veröffentlichungstag der Patentschrift :
**17.07.91 Patentblatt 91/29**

(51) Int. Cl.$^5$ : **B29C 51/26, B29C 67/22**

(21) Anmeldenummer : **88119372.6**

(22) Anmeldetag : **22.11.88**

(54) **Vakuum-Tiefziehvorrichtung zum Herstellen von Polstern mit hinterschäumten Bezügen.**

(30) Priorität : **25.11.87 DE 3739843**

(43) Veröffentlichungstag der Anmeldung :
**14.06.89 Patentblatt 89/24**

(45) Bekanntmachung des Hinweises auf die
Patenterteilung :
**17.07.91 Patentblatt 91/29**

(84) Benannte Vertragsstaaten :
**BE DE FR GB IT LU**

(56) Entgegenhaltungen :
**DE-A- 2 224 759**
**DE-A- 3 034 973**
**FR-A- 2 280 491**

(73) Patentinhaber : **GRAMMER AG**
**Wernher-von-Braun-Strasse 6**
**W-8450 Amberg/Opf. (DE)**

(72) Erfinder : **Storch, Helmut**
**Am Südhang 5**
**W-8450 Amberg (DE)**

(74) Vertreter : **LOUIS, PÖHLAU, LOHRENTZ &**
**SEGETH**
**Kesslerplatz 1 Postfach 3055**
**W-8500 Nürnberg-1 (DE)**

## Beschreibung

Die Erfindung betrifft eine Vakuum-Tiefziehvorrichtung und ein Verfahren zum Herstellen von Polstern mit hinterschäumten Bezügen, bei der das Hineingleiten des angesaugten Bezugs in den Formhohlraum der Tiefziehform mittels eines den Bezug gegen eine Bezugsauflagefläche der Tiefziehform drückenden Spannrahmens kontrolliert wird.

Die bekannten Vakuum-Tiefziehvorrichtungen dieser Art z.B. DE-OS-3034973 dienen in erster Linie zum Tiefziehen und Hinterschäumen von nichtdehnfähigen Bezügen ohne größere Faltenbildung des Bezugs nach dem Hineingleiten in den Formhohlraum. Eine derartige Faltenbildung ist besonders bei größeren Ziehtiefen und starken Formhinterschneidungen —z.B. bei Seitenführungen bei PKW-Sitzpolstern —zu befürchten. Da bei diesen Vakuum-Tiefziehvorrichtungen nach dem Stand der Technik der Spannrahmen nur flächig bis zum Hinterschäumvorgang auf den Bezug einwirkt, wird der zwischen dem Spannrahmen und der Bezugsauflagefläche der Tiefziehform eingeklemmte Bezug so lange in den Formhohlraum nachrutschen, bis der Bezug vollständig an der Wandung des Formhohlraumes anliegt. Eine geringfügige Dehnung des an sich nicht-dehnfähigen Bezugs gegen Ende des Hineingleitens in den Formhohlraum— also kurz bevor der Bezug vollständig an der Wandung des Formhohlraums anliegt—wird mangels Fixierung des Bezugs nicht erreicht. Die mangelnde Dehnung des an sich nicht-dehnfähigen Bezugs am Ende des Vakuum-Tiefziehvorganges wirkt sich aber insofern auf die Faltenbildung aus, als sie in diesem Falle nicht immer sicher vermieden werden kann.

Der Erfindung liegt daher die Aufgabe zugrunde, die eingangs als bekannt vorausgesetzte Vakuum-Tiefziehvorrichtung so zu verbessern, daß die angesprochene Faltenbildung in noch grösserem Umfang vermieden und die Ausprägung der Kontur des Bezuges erhöht werden kann.

Diese Aufgabe wird erfindungsgemäß dadurch gelöst, daß der Spannrahmen eine nahe dem Öffnungsrand des Formhohlraumes umlaufende Messerkante aufweist zum Festhalten des Bezugs nach dessen Hineingleiten in den Formhohlraum und vor dessen vollständiger Anlage an die Wandung desselben.

Die erfindungsgemäße Vakuum-Tiefziehvorrichtung wirkt zunächst wie die nach dem Stand der Technik. Der Bezug wird zunächst nur flächig gegen die Bezugsauflagefläche der Tiefziehform gedrückt, so daß er zwischen dem Spannrahmen und der Bezugsauflagefläche beim Ansaugen in den Formhohlraum durchrutschen kann. Ist jedoch der kaum dehnfähige Bezug weit genug in den Formhohlraum geglitten, so wird der Spannrahmen noch mehr gegen die Bezugsauflagefläche der Tiefziehform gedrückt, bis die erfindungsgemäße Messerkante auf der dem Formhohlraum zugewandten Seite des Spannrahmens wirksam wird. Diese Messerkante übt naturgemäß aufgrund ihrer kleinen Auflagefläche einen hohen Druck auf den Bezug aus und kann diesen gegen ein großes Vakuum im Formhohlraum der Tiefziehform festhalten, so daß der Bezug am Ende des Tiefziehvorganges noch eine Dehnung erfährt, die der Faltenbildung entgegenwirkt. Gleichzeitig wird durch das Einquetschen des Bezuges mittels der Messerkante eine Verbesserung der Abdichtung nach außen erreicht, so daß leichter größere Vakuumkräfte in dem Formhohlraum am Ende des Tiefziehvorganges erzielt werden können, durch die der luftundurchlässige Bezug am Ende des Tiefziehvorganges noch gedehnt werden soll. Die Messerkante wirkt sich also in doppelter Hinsicht günstig aus.

Die Messerkante hat aber auch noch den großen Vorteil, daß der Raum- und/oder Zeitpunkt, an dem der Bezug festgehalten werden soll, genau festgelegt werden kann im Gegensatz zu einem flächigen Kraftschluß, bei dem die Grenze zwischen Gleiten und Nicht-Gleiten verwischt ist. Dadurch kann der tiefzuziehende und zu hinterschäumende Bezug so knapp zugeschnitten werden, daß nach vollständigem Tiefziehen des Bezugs nur wenig noch über die Messerkante des Spannrahmens aus dem Formhohlraum ragt, so daß im Gegensatz zum Stand der Technik ein nachträgliches Beschneiden des Bezuges nicht erforderlich wird. Abgesehen von der Materialersparnis wird auch ein Arbeitsgang eingespart, was sich ganz erheblich auf die Senkung der Herstellungskosten auswirkt.

Es muß noch erwähnt werden, daß durch die bessere Abdichtung aufgrund der Messerkante auch die installierte Vakuumleistung der Vakuum-Tiefziehvorrichtung im Vergleich zum Stand der Technik geringer ausfallen kann, was Energie einzusparen hilft. Auch dies wirkt sich auf die Herstellungskosten offensichtlich günstig aus.

Zweckmäßigerweise ist der Spannrahmen als zum eingeklemmten Bezug hin offener Hohlkörper ausgebildet, dessen dem Formhohlraum zugewandte Seitenwandung die Messerkante trägt und dessen vom Formhohlraum abgewandte Seitenwandung eine mit der freiliegenden Bezugsauflagefläche der Tiefziehform zusammenwirkende Abdichtungseinrichtung aufweist.

In dieser Ausführungsform der Erfindung ist die Abdichtwirkung um einen weiteren Schritt verbessert. Der Vakuumzug, der durch die Textile an der Wandung des Formhohlraums sowie auf der Bezugsauflagefläche anliegenden Bezugsoberseite trotz des Andrückens der Messerkante wirkt, drückt den Spannrahmen weiter gegen die Bezugsauflagefläche der Tiefziehform.

Die Erfindung wird nun anhand der beiliegenden Zeichnung näher erläutert. In der Zeichnung stellen dar :

Fig. 1 schematisch einen Teilschnitt durch die erfindungsgemäße Vakuum-Tiefziehvorrichtung nach angelegtem Spannrahmen aber vor dem Wirksamwerden der Messerkante und

Fig. 2 den gleichen Teilschnitt wie in Fig. 1 bei Wirksamwerden der Messerkante.

Eine Vakuum-Tiefziehform 10 weist den Formhohlraum 12 auf, in den Vakuumkanäle 14 zur Erzeugung eines Unterdruckes münden. Mit Hilfe des Unterdruckes wird ein kaum dehnfähiger Bezug 16 angesaugt, der mit Hilfe eines Spannrahmens 18 gegen die um die Öffnung des Formhohlraums 12 umlaufende Bezugsauflagefläche 20 angedrückt wird. Der Spannrahmen 18 ist als Hohlkörper mit U-förmigem Querschnitt ausgebildet, dessen offene Seite zum Bezug 16 weist und in dem wie gezeigt ein umlaufender Andrückrahmen 22 angeordnet ist, der mit Hilfe von sich an einem feststehenden Steg 24 im Spannrahmen abstützenden Anpressfedern 26 nach außen gedrückt wird. Führungsbolzen 28 sorgen für eine Führung des Andrückrahmens und begrenzen den maximalen Abstand des Andrückrahmens 22 vom feststehenden Steg 24.

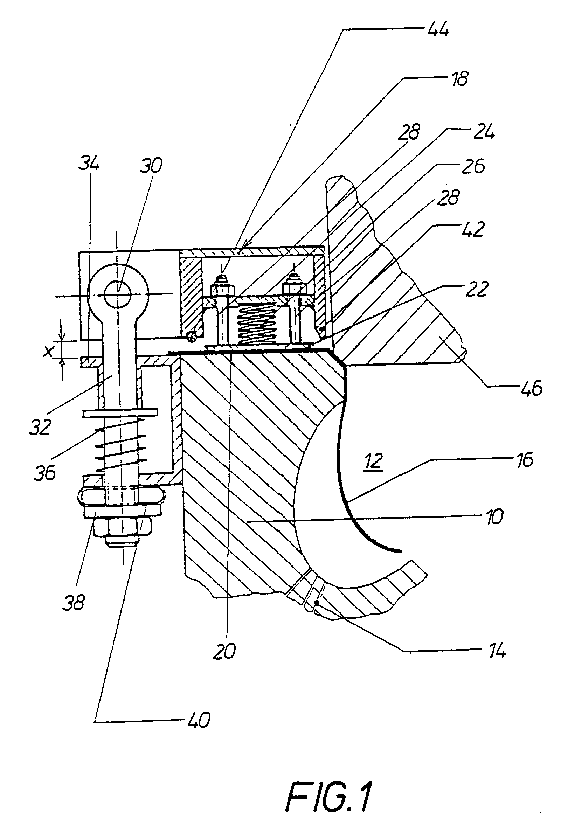

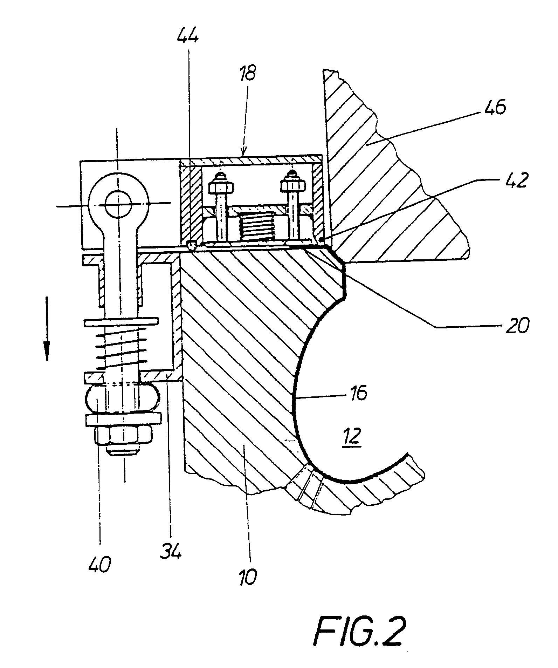

Der Spannrahmen 18 ist um eine Welle 30 verschwenkbar, so daß er vom Formhohlraum 12 zum Auflegen des Bezugs auf die Vakuum-Tiefziehform 10 weggeklappt werden kann. An der Welle 30 greifen mehrere Zugstangen 32 an, die den Spannrahmen 18 gegen die Vakuum-Tiefziehform 10 drücken können. Da der Spannrahmen 18 den Formhohlraum 12 umläuft, befindet sich auf der zur Welle 30 entgegengesetzten Seite des Formhohlraums eine ähnliche auf den Spannrahmen 18 wirkende Zugvorrichtung, damit dieser gleichmäßig beaufschlagt werden kann. Diese Zugvorrichtung ist nicht gezeigt, aber dem Fachmann auf diesem Gebiet geläufig und kann ähnlich der Zugvorrichtung auf der in der Zeichnung linken Seite der Vakuum-Tiefziehform 10 ausgestaltet werden. Wie aus der Zeichnung ersichtlich, ist die Zugstange 32 mittels eines U-förmigen Halters 34 an der Vakuum-Tiefziehform 10 geführt und wird mittels einer Schraubenfeder 36 wie gezeigt derart beaufschlagt, daß der Spannrahmen 18 einen gewissen Abstand x von der Bezugsauflagefläche 20 aufweist, so daß bei heruntergeklapptem Spannrahmen 18 nur der Andrückrahmen 22 auf dem Bezug 16 mit der durch die Kraft der Feder 26 bedingten Kraft anliegt. Zwischen dem in der Zeichnung unteren Schenkel des U-förmigen Halters 34 und einem außerhalb des Halters 34 liegenden Anschlag 38 der Zugstange 32 ist ein Druckluftantriebselement (ein aufblasbares Organ) vorgesehen, das bei Beaufschlagung mit Druckluft (vgl. die Figuren 1 und 2) die Zugstange 32 und damit den Spannrahmen 18 nach unten gegen die Bezugsauflagefläche 20 zieht.

Erfindungsgemäß weist nun der Spannrahmen 18 aus der dem Formhohlraum 12 zugewandten Seite wie gezeigt eine Messerkante 42 auf, die bei voller Beaufschlagung des Druckluftantriebselements 40 mit Druckluft gegen den Bezug 16 gedrückt wird und diesen wie in Fig. 2 gezeigt festhält, nachdem dieser weitgehend in den Formhohlraum 12 durch das zwischen dem Bezug und der Wandung des Formhohlraums aufgebaute Vakuum eingezogen wurde, wie dies in Fig. 2 dargestellt ist. Vorher kann der Bezug 16, wie es in Fig. 1 dargestellt ist, zwischen dem Andrückrahmen 22 und der Bezugsauflagefläche 20 der Vakuum-Tiefziehform 10 beim Einzug in den Formhohlraum hindurchgleiten, wie dies an sich bekannt ist.

Die dem Formhohlraum 12 abgewandte Seite des Spannrahmens 18 weist eine Abdichtungseinrichtung 44 wie gezeigt auf, die dann mit der freiliegenden Bezugsauflagefläche 20 (also nicht vom Bezug 16 bedeckten Bezugsauflagefläche 20) in Anlage kommt, wenn der Bezug 16 genügend weit in den Formhohlraum 12 eingezogen ist und von der Messerkante 42 festgehalten wird. Auf diese Weise wird eine Leckage durch die textile Bezugsoberseite, die an der Bezugsauflagefläche 20 und an der Wandung des Formhohlraums 12 anliegt, sicher vermieden und der Spannrahmen 18 in einem Rückkoppelungseffekt noch stärker gegen die Vakuum-Tiefziehform gedrückt.

Mit 46 ist ein nicht näher gezeichnetes Oberteil der Vakuum-Tiefziehvorrichtung gezeigt, in dem sich der Mischkopf für das Hinterschäumen des Bezugs befindet.

## Patentansprüche

1. Vakuum-Tiefziehvorrichtung zum Herstellen von Polstern mit hinterschäumten Bezügen, bei der das Hineingleiten des angesaugten Bezugs (16) in den Formhohlraum (12) der Tiefziehform (10) mittels eines den Bezug (16) gegen eine Bezugsauflagefläche (20) der Tiefziehform drückenden Spannrahmens (18) kontrolliert wird, **dadurch gekennzeichnet, daß** der Spannrahmen (18) eine nahe dem Öffnungsrand des Formhohlraums (12) umlaufende Messerkante (42) aufweist zum Festhalten des Bezugs nach dessen Hineingleiten in den Formhohlraum und vor der vollständigen Anlage an die Wandung desselben.

2. Vakuum-Tiefziehvorrichtung nach Anspruch 1, **dadurch gekennzeichnet, daß** der Spannrahmen (18) als zum eingeklemmten Bezug (16) offener Hohlkörper ausgebildet ist, dessen dem Formhohlraum (12) zugewandte Seitenwandung die Messerkante (42) trägt und dessen vom Formhohlraum (12) abgewandte Seitenwandung eine mit der freiliegenden Bezugsauflagefläche (20) der Tiefziehform zusammenwirkende Abdichtungseinrichtung (44) aufweist.

3. Verfahren zum Herstellen von Polstern mit hinterschäumten Bezügen, bei dem das Hineingleiten des angesaugten Bezugs (16) in einen Formhohlraum (12) einer Tiefziehform (10) mittels eines den Bezug (16) gegen eine Bezugsauflagefläche (20) der Tiefziehform drückenden Spannrahmens (18) kontrolliert wird, **dadurch gekennzeichnet,** daß das Hineingleiten des Bezugs (16) in den Formhohlraum (12) durch Fixierung des Bezugs (16) außerhalb des Formhohlraums (12) unterbrochen wird, bevor der Bezug vollständig an der Wandung des Formhohlraums anliegt.

## Claims

1. A vacuum forming apparatus for the manufacture of upholstery with foam backed covers, wherein the inward sliding of the cover (16) sucked into the die cavity (12) of the forming mould (10) is controlled by means of a stenter frame (18) pressing the cover (16) against a bearing surface (20) for the cover of the forming mould,
characterized in that the stenter frame (18) has a peripheral cutter edge (42) near the opening rim of the die cavity (12) for holding the cover after it has slid into the die cavity and before it is completely applied against the wall of the latter.

2. A vacuum forming apparatus according to claim 1, characterized in that the stenter frame (18) is designed as a hollow body open towards the clamped-in cover (16), whose side wall facing the die cavity (12) carries the knife edge (42) and whose side wall remote from the die cavity (12) has a sealing device (44) cooperating with the free bearing surface (20) for the cover of the forming mould.

3. A method for the manufacture of upholstery with foam backed covers wherein the inward sliding of the cover (16) sucked into the die cavity (12) of the forming mould (10) is controlled by means of a stenter frame (18) pressing the cover (16) against a bearing surface (20) for the cover of the forming mould, characterized in that the inward sliding of the cover (16) into the die cavity (12) is interrupted by the fixing of the cover (16) outside the die cavity (12) before the cover is completely applied against the wall of the die cavity.

## Revendications

1. Dispositif d'emboutissage sous vide pour la fabrication de coussins comportant un revêtement à revers en mousse, dans lequel le passage glissant du revêtement (16) aspiré dans la cavité de moulage (12) du moule d'emboutissage sous vide (10) est contrôlé au moyen d'un cadre de serrage (18) comprimant le revêtement (16) contre une surface portante de revêtement (20) du moule d'emboutissage,
caractérisé en ce que le cadre de serrage (18) comporte une arête de couteau (42) périphérique, à proximité du bord d'ouverture de la cavité de moulage (12), pour immobiliser le revêtement après qu'il a pénétré dans la cavité de moulage et avant qu'il soit complètement appliqué contre la paroi de ladite cavité de moulage.

2. Dispositif d'emboutissage sous vide selon la revendication 1, caractérisé en ce que le cadre de serrage (18) est réalisé en forme de corps creux, ouvert en direction du revêtement bloqué, dont la paroi latérale tournée vers la cavité de moulage (12) porte l'arête de couteau (42) et dont la paroi latérale opposée à la cavité de moulage (12) comporte un dispositif d'étanchéité (44) qui coopère avec la surface portante libre de revêtement (20) du moule d'emboutissage.

3. Procédé de fabrication de coussins comportant un revêtement à revers en mousse, dans lequel le passage glissant du revêtement (16) aspiré dans une cavité de moulage (12) d'un moule d'emboutissage sous vide (10) est contrôlé au moyen d'un cadre de serrage (18) comprimant le revêtement (16) contre une surface portante de revêtement (20) du moule d'emboutissage, caractérisé en ce que le passage coulissant du revêtement (16) dans la cavité de moulage (12) est interrompu par un blocage du revêtement (16) à l'extérieur de la cavité de moulage (12), avant que le revêtement soit complètement appliqué contre la paroi de la cavité de moulage.

FIG.1

FIG.2